# EUROPEAN PATENT SPECIFICATION

(11) **EP 1 974 795 B1**
(45) Date of publication and mention of the grant of the patent: **29.02.2012**
(21) Application number: 07018264.7
(22) Date of filing: 18.09.2007
(51) Int. Cl.: B01D 53/94, B01J 35/04, F01N 3/022, F01N 3/28, B01D 46/24, C04B 35/565, C04B 35/584, C04B 38/00

(54) **Honeycomb filter**
Wabenfilter
Filtre en nids d'abeilles

(30) Priority: 30.03.2007 WO PCT/JP2007/057294
(43) Date of publication of application: 01.10.2008
(73) Proprietor: Ibiden Co., Ltd., Ogaki-shi Gifu 503-8604 (JP)
(72) Inventor: Ohno, Kazushige c/o IBIDEN CO., LTD., Gifu 501-0695 (JP); Ohira, Akihiro c/o IBIDEN CO., LTD., Gifu 501-0695 (JP)
(74) Representative: HOFFMANN EITLE

(56) References cited:
- EP-A- 1 837 498
- FR-A- 2 849 670
- JP-A- 2003 154 223
- US-A- 5 089 237
- US-A1- 2006 057 046

## Description

### TECHNICAL FIELD

The present invention relates to a honeycomb filter.

### BACKGROUND ART

In recent years, particulates (hereinafter, also referred to as "PMs") such as soot contained in exhaust gases discharged from internal combustion engines of vehicles such as buses and trucks, and construction machines have raised serious problems as contaminants harmful to the environment and the human body.
For this reason, various honeycomb filters, which use a honeycomb structured body made of a porous ceramic, have been proposed as filters that collect PMs in exhaust gases and purify the exhaust gases.
In such a honeycomb filter, a catalyst used for converting exhaust gases may be supported thereon, and in this case, a catalyst supporting layer is formed in an area on which the catalyst is to be supported, so that the catalyst is supported on the catalyst supporting layer.
Patent Document 1 has disclosed: a honeycomb filter made from silicon carbide, in which more catalyst is supported on the side that allows exhaust gases to flow in (gas inlet side) and less catalyst is supported on the side that allows exhaust gases to flow out (gas outlet side), or a catalyst is supported only on the gas inlet side and no catalyst is supported on the gas outlet side; and an exhaust gas purifying system in which such a honeycomb filter is placed in an exhaust gas passage.
Moreover, Patent Document 2 has disclosed a honeycomb filter that is designed to make the amount of supported catalyst successively smaller step by step or continuously, from the gas inlet side toward the gas outlet side of the honeycomb filter.

In a honeycomb filter disclosed in Patent Documents 1 and 2, since the temperature in the honeycomb filter on the gas outlet side tends to become higher than the temperature in the honeycomb filter on the gas inlet side upon passage of high temperature exhaust gases, PMs are sufficiently burned even when the amount of catalyst supported on the gas outlet side of the honeycomb filter is small.
The honeycomb filter disclosed in each of Patent Documents 1 and 2 has been manufactured considering the phenomenon, and the thickness of each cell wall of the honeycomb filter is about 0.30 to 0.36 mm.

In the honeycomb filters disclosed in Patent Documents 1 and 2, it is possible to reduce the amount of catalyst to be supported on the gas outlet side, and consequently to cut production costs.
Moreover, by reducing the amount of catalyst to be supported, the initial pressure loss can be lowered.
Patent Document 1: JP-A 2003-154223
Patent Document 2: JP-A 2003-161138

### DISCLOSURE OF THE INVENTION PROBLEMS TO BE SOLVED BY THE INVENTION

Moreover, it is considered that, in general, the honeycomb filter is preferably provided with a high regeneration limit value (the maximum value of amount of captured PMs which would not cause any cracks in the filter even upon burning captured PMs). This is because frequent regeneration processes are required in an exhaust gas purifying system using a honeycomb filter with a low regeneration limit value, which leads to a problem of lowering fuel economy of an internal combustion engine.
In the conventional honeycomb filters, however, nothing has been taken into consideration about the regeneration limit value, and the regeneration limit value should be improved.

### MEANS FOR SOLVING THE PROBLEMS

In order to provide a honeycomb filter having a higher regeneration limit value, the inventors of the present invention have extensively conducted research efforts.
As a result, the inventors have found that, first, heat radiation in the vicinity of the end face on the gas outlet side surely progresses when a catalyst supporting layer is not formed in the area covering at least 10% of the overall length of the honeycomb filter from the end face on the gas outlet side of the honeycomb filter and when the thermal conductivity of this area covering at least 10% is made higher than the thermal conductivity of the area with a catalyst supporting layer being formed therein. In this case, the suppression of the temperature rise on the gas outlet side makes it difficult to generate a thermal impact caused by the temperature difference between the gas inlet side and the gas outlet side of the honeycomb filter, thereby achieving a high regeneration limit value in the honeycomb filter.

Moreover, in the case of supporting a catalyst on the honeycomb filter, since a reaction of gases having flowed in generates heat in the area with the catalyst being supported thereon, the calorific value in the area with the catalyst being supported thereon becomes greater than that of the area with the catalyst being not supported thereon. Here, when the area with the catalyst being supported thereon is too narrow, a large amount of heat is generated in the narrow area. Further, since the area with the catalyst supporting layer being formed therein has a lower thermal conductivity compared to the area with the catalyst supporting layer being not formed therein, the area is in a state that hardly causes heat radiation.
For this reason, when the catalyst supporting layer having a catalyst supported thereon is formed in a narrow area, the temperature difference between the corresponding area and the other areas becomes very large, with the result that a greater thermal impact is applied onto the honeycomb filter.
In contrast, the inventors of the present invention have found that, by forming the catalyst supporting layer in the area covering 25% or more of the overall length of the honeycomb filter out of the area covering 90% of the overall length of the honeycomb filter from the end face on the gas inlet side, it is possible to prevent the generation of a large amount of heat within a narrow area, and consequently to prevent a great thermal impact from being applied onto the honeycomb filter, thereby achieving a high regeneration limit value in the honeycomb filter.

Furthermore, with respect to the honeycomb filter with the catalyst supporting layer being formed only in the predetermined area as described above, the inventors of the present invention have observed a state of the honeycomb filter after capturing PMs. Then, surprisingly, a phenomenon has been confirmed in which more PMs had been captured on the gas outlet side compared to those on the gas inlet side.

As indicated by the results of the observation, it is considered that carrying out a regeneration process on a honeycomb filter with more PMs captured on the gas outlet side of the honeycomb filter makes the temperature on the gas outlet side higher than the temperature on the gas inlet side; therefore, the temperature difference between the gas inlet side and the gas outlet side of the honeycomb filter becomes greater, with the result that the thermal impact to be applied to the honeycomb filter becomes greater and cracks are easily generated.
From this point of view, it is presumed that more PMs being captured on the gas outlet side of the honeycomb filter causes a reduction in the regeneration limit value of the honeycomb filter.

Based upon these, the inventors of the present invention have found that PMs should be captured as uniformly as possible from the gas inlet side toward the gas outlet side of the honeycomb filter in order to increase the regeneration limit value of the honeycomb filter, and have completed the present invention.

That is, the invention according to claim 1 relates to a honeycomb filter comprising a pillar-shaped honeycomb fired body having a large number of cells longitudinally disposed in parallel with one another with a cell wall therebetween, only one end of each of the cells being sealed,
the honeycomb filter allowing gases having flowed in through the cells open on one end face side of the body forming the gas inlet side to flow out through the cells on the other end face side of the body forming the gas outlet side,
wherein
the thickness of each of the cell walls is 0.20 to 0.28 mm;
no catalyst supporting layer is formed is the area covering 10% of she overall length of the honeycomb filter from the end face on the gas outlet side of the honeycomb filter;
out of the area covering 90% of the overall length of the honeycomb filter from the end face on the gas inlet side, a catalyst supporting layer is formed in the area covering 25% to 90% of the overall length of the honeycomb filter; and
in the honeycomb filter, a thermal conductivity of the area with the catalyst supporting layer being not formed therein is higher than a thermal conductivity of the area with the catalyst supporting layer being formed therein,

According to the invention described in claim 1, the thickness of each cell wall is 0.20 to 0.28 mm, which is thinner than the thickness range (0.30 to 0.36 mm) of each cell wall in the conventionally known honeycomb filter, and said honeycomb filter includes silicon carbide as the main component of the ceramic material.

In general, the strength of each cell wall is lowered when the thickness of the cell wall is made thinner. Thus, it is presumed that, when the thickness of each cell wall is in a thinner range compared to that of the conventional cell wall as in the case of the present invention, the regeneration limit value is lowered compared to that of the conventional honeycomb filter. However, in the honeycomb filter of the present invention, contrary to this presumption, by seating the thickness of each cell wall to a thinner range compared to that of the conventional honeycomb filter, it becomes possible two provide a honeycomb filter having a higher regeneration limit value compared to that of the conventional honeycomb filter.

Although the mechanism is not clarified in which the regeneration limit value can be made higher by setting the thickness of each cell wall to a thinner range compared to the conventional range, it is presumed that, when the thickness of each cell wall is made thinner, exhaust gases are allowed to easily pass through the cell wall on the gas inlet side because the resistance toward exhaust gases passing through the cell wall becomes lower than that in the case of passing through a thicker cell wall. For this reason, out of the exhaust gases passing through the cell walls, the rate of exhaust gases passing through the gas inlet side becomes higher than that of the conventional honeycomb filter, so that PMs are easily captured on the gas inlet side as well.
Consequently, in the honeycomb filter of the present invention, it is possible to make the amount of PMs to be captured on the gas outlet side relatively smaller, and the temperature difference between the gas inlet side and the gas outlet side upon burning PMs becomes smaller; thus, cracks hardly occur upon regenerating a honeycomb filter, and a honeycomb filter having a high regeneration limit value can be provided.

Here, the thickness of each cell wall being less than 0.20 mm is not desirable because it causes greater influences on the reduction in the strength of the cell wall, with the result that a honeycomb filter having a low regeneration limit value is produced.

Moreover, by making the thickness of each cell wall thinner to 0.28 mm or less, the cell aperture area widens compared to that of the conventional honeycomb filter. Consequently, it is possible to slow the inlet speed of exhaust gases flowing into the cells. The slow speed of exhaust gases lowers the rate of PMs that reach the end of the cell (the gas outlet side) ; therefore, it is possible to increase the amount of PMs to be captured by the cell walls on the gas inlet side, and consequently to provide a honeycomb filter having a high regeneration limit value.

Moreover, in the honeycomb filter described in claim 1, no catalyst supporting layer is not formed in the area covering 10% of the overall length of the honeycomb filter from the end face on the gas outlet side, and in the honeycomb filter, the thermal conductivity of the area with the catalyst supporting layer being not formed therein is higher than the thermal conductivity of the area with the catalyst supporting layer being formed therein.
In this manner, by setting the area covering 10% of the overall length of the honeycomb filter from the end face on the gas outlet side as an area made of a member having a higher thermal conductivity, it is possible to accelerate the heat radiation in the vicinity of the end face on the gas outlet side. Consequently, the temperature rise of the honeycomb filter on the gas outlet side is prevented, thereby making it difficult to generate a thermal impact caused by the temperature difference between the gas inlet side and the gas outlet side of the honeycomb filter and a honeycomb filter having a high regeneration limit value can be provided.

Moreover, when the catalyst is supported, heat is generated by a reaction with gases. Therefore, in the area with the catalyst being supported thereon, calorific value is greater than in the area with the catalyst being not supported thereon. Further, since the area with the catalyst supporting layer being formed therein has a thermal conductivity lower than that of the area with the catalyst supporting layer being not formed therein, heat radiation hardly occurs in the area with the catalyst supporting layer being formed therein. For this reason, in the case when the area with the catalyst being supported thereon is too narrow, a large amount of heat is generated in the narrow area. Thus, the temperature difference between the area in which the catalyst is supported on the catalyst supporting layer and the area with the catalyst supporting layer being not formed therein becomes larger, with the result that a greater thermal impact is applied onto the honeycomb filter.

In contrast, as indicated by the honeycomb filter described in claim 1, in the case of forming the catalyst supporting layer in the area covering 25% or more of the overall length of the honeycomb filter from the end face on the gas inlet side, it is possible to provide a honeycomb filter having a high regeneration limit value, since the area with the catalyst being supported thereon is not too narrow upon supporting a catalyst thereon, and the temperature difference between the area in which the catalyst is supported on the catalyst supporting layer and the area with the catalyst supporting layer being not formed therein does not become too large.

Moreover, in the honeycomb filter of the present invention, since the catalyst supporting layer is formed in the area covering 25% or more of the overall length of the honeycomb filter out of the area covering 90% of the overall length of the honeycomb filter from the end face on the gas inlet side, it is possible to prevent the generation of a large amount of heat within a narrow area, and consequently to improve the regeneration limit value of the honeycomb filter.

As described above, in the honeycomb filter according to claim 1, the thickness of each cell wall is controlled into a desirable range, and the catalyst supporting layer is formed in a specific area. Thus, the honeycomb filter described in claim 1 is to have a high regeneration limit value.

Therefore, although the thickness of each cell wall is in a thinner range compared to that of the conventional honeycomb filter, it is possible to provide a honeycomb filter having a high regeneration limit value. Since silicon carbide has a high thermal conductivity, the honeycomb filters according to claim 1 are to have a very high regeneration limit value.

According to the invention described in claim 2, a catalyst is supported on the catalyst supporting layer.

Thus, the invention described in claim 2 makes it possible to convert exhaust,gases by the catalyst supported on the catalyst supporting layer.

In the invention described in claim 3, a thermal conductivity of the area with the catalyst supporting layer being not formed therein is 1.3 to 5.0 times higher than the thermal conductivity of the area with the catalyst supporting layer being formed therein.

According to the invention described in claim 3, since the area in the honeycomb filter, with the catalyst supporting layer being not formed therein has a thermal conductivity that is 1.3 to 5.0 times higher than the thermal conductivity of the area in the honeycomb filter, with the catalyst supporting layer being formed therein, it is possible to suppress the generation of a thermal impact caused by the temperature difference between the gas inlet side and the gas outlet side of the honeycomb filter. For this reason, the honeycomb filter described in claim 3 is to have a higher regeneration limit value.

### BEST MODE FOR CARRYING OUT THE INVENTION

### (First Embodiment)

Referring to Figures, the following description will discuss a first embodiment that is one embodiment of the present invention.

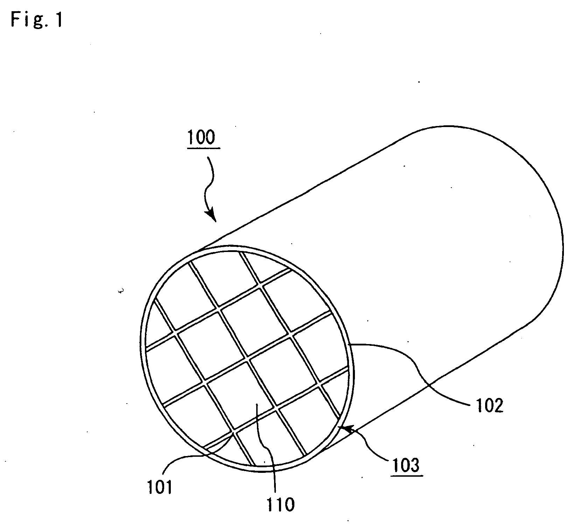

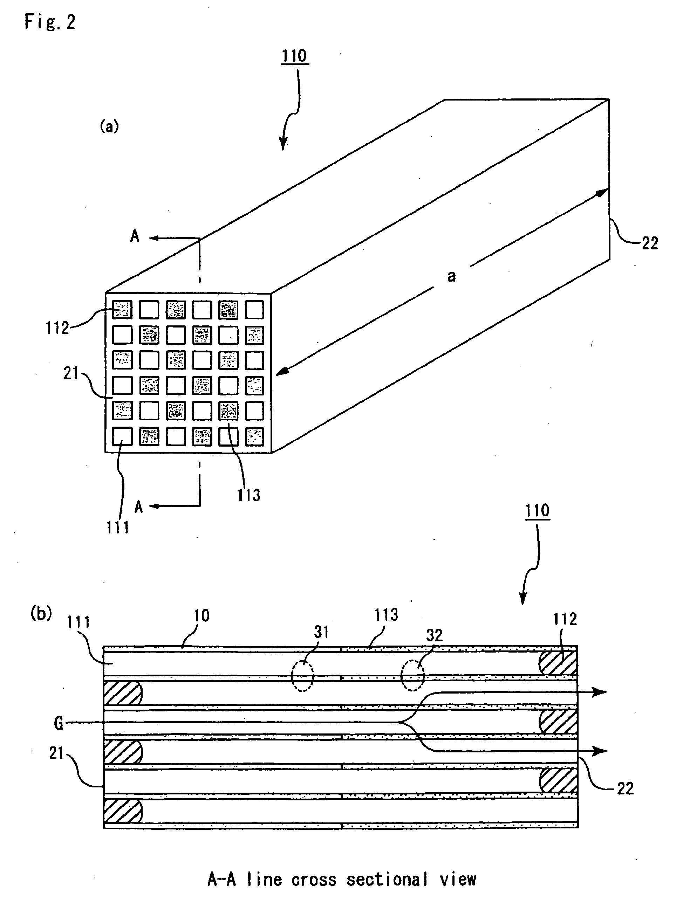

Fig. 1 is a perspective view schematically showing one example of a honeycomb filter of the present invention. Fig. 2 (a) is a perspective view schematically showing one example of a honeycomb fired body forming a honeycomb filter of the present invention, and Fig. 2(b) is an A-A line cross-sectional view of the honeycomb fired body shown in Fig. 2(a).

In a honeycomb filter 100, a plurality of honeycomb fired bodies 110, as shown in Figs. 2(a) and 2(b), are combined with one another by interposing a sealing material layer (adhesive layer) 101 to form a ceramic block 103, and a sealing material layer (coat layer) 102 is further formed on the periphery of this ceramic block 103.

The honeycomb fired body 110 mainly includes silicon carbide. In the honeycomb fired body 110, a large number of cells 111 are longitudinally disposed in parallel with one another (in a direction shown by an arrow a in Fig. 2(a)) with a cell wall 113 therebetween, only one end of each of the cells 111 is sealed with a plug 112. Therefore, exhaust gases G having flowed into the cell 111 having an opening on an end face 21 of the gas inlet side surely passes through the cell wall 113 that separates the cells 111, and flows out from another cell 111 having an opening on an end face 22 of the gas outlet side.
Therefore, the cell wall 113 functions as a filter for capturing PMs and the like.

Moreover, in the present embodiment, the thickness of the cell wall 113 is 0.20 to 0.28 mm, which is a thinner range compared to the thickness of the cell wall (0.30 to 0.36 mm) in the conventionally known honeycomb filter.

Further, a catalyst supporting layer 10 is formed in a predetermined area of the honeycomb filter 100.
This catalyst supporting layer 10 is a layer made of alumina having a large specific surface area, and a platinum (Pt) catalyst is supported on the surface of the catalyst supporting layer 10 so as to convert toxic components in exhaust gases and accelerate the burning process of PMs.

Referring to Figures, the following description will discuss the predetermined area with the catalyst supporting layer 10 being formed therein.

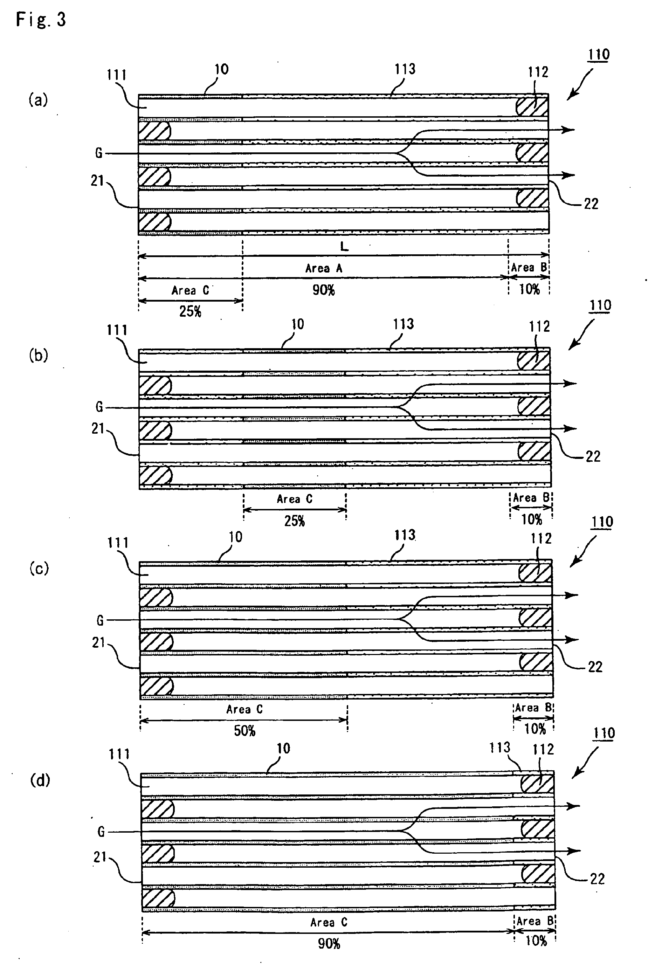

Figs. 3(a) to 3(d) each is a cross-sectional view schematically showing an example of a honeycomb fired body with a catalyst supporting layer being formed in a predetermined area.
More specifically, in the honeycomb fired body shown in Fig. 3(a), a catalyst supporting layer 10 is formed in the area covering 25% of the overall length L of the honeycomb fired body from the end face 21 on the gas inlet side; in the honeycomb fired body shown in Fig. 3(b), a catalyst supporting layer 10 is formed in the area covering 25 to 50% of the overall length L of the honeycomb fired body from the end face 21 on the gas inlet side; in the honeycomb fired body shown in Fig. 3(c), a catalyst supporting layer 10 is formed in the area covering 50% of the overall length L of the honeycomb fired body from the end face 21 on the gas inlet side; and in the honeycomb fired body shown in Fig. 3(d), a catalyst supporting layer 10 is formed in the area covering 90% of the overall length L of the honeycomb fired body from the end face 21 on the gas inlet side.
Here, the overall length of the honeycomb filter is equal to the overall length of the honeycomb fired body.

In each of the honeycomb fired bodies shown in Figs. 3 (a) to 3(d), no catalyst supporting layer is formed in the area covering 10% of the overall length L of the honeycomb fired body 110 from the end face 22 on the gas outlet side (area B in Figs. 3(a) to 3(d)). Moreover, out of the area covering 90% of the overall length L of the honeycomb fired body 110 from the end face 21 on the gas inlet side (area A in Fig. 3(a)), a catalyst supporting layer 10 is formed in the area covering 25% to 90% (area C in Figs. 3(a) to 3(d)) of the overall length L of the honeycomb fired body 110.

The area C with the catalyst supporting layer 10 being formed therein may be provided continuously from the end face 21 on the gas inlet side as shown in Figs. 3(a), 3(c), and 3(d); however, this area may be provided continuously from a position apart from the end face 21 on the gas inlet side as shown in Fig. 3(b).
Here, the catalyst supporting layer 10 may be formed on the surface of the cell wall 113, or may be formed inside of the cell wall 113.

Moreover, in the present embodiment, the thermal conductivity of the area in the honeycomb filter, with the catalyst supporting layer being not formed therein is set so as to be higher than the thermal conductivity of the area in the honeycomb filter, with the catalyst supporting layer being formed therein. More specifically, the thermal conductivity of the area in the honeycomb filter, with the catalyst supporting layer being not formed therein is to be desirably 1.3 to 5.0 times higher than the thermal conductivity of the area in the honeycomb filter, with the catalyst supporting layer being formed therein.
The thermal conductivities of the two areas can be obtained by respectively measuring thermal conductivities toward the cell walls at a measuring portion 31 on the gas inlet side and a measuring position 32 on the gas outlet side, respectively shown in Fig. 2(b).

Hereinafter, the following description will discuss the manufacturing methods of a catalyst carrier and a honeycomb filter of the present embodiment.
First, mixed powder is prepared by dry mixing powder of silicon carbide having different average particle diameters as a ceramic material and an organic binder, and concurrently, a mixed liquid is prepared by mixing a liquid plasticizer, a lubricant, and water. Then, the mixed powder and the mixed liquid are mixed by using a wet mixing apparatus so that a wet mixture for manufacturing a molded body is prepared.

Successively, the wet mixture is charged into an extrusion-molding machine.
A honeycomb molded body in a predetermined shape is formed by charging the wet mixture into the extrusion-molding machine and extrusion-molding the wet mixture.
Upon extrusion molding, the metal mold (die) of the extrusion-molding machine is appropriately selected so as to set the thickness of each cell wall to a predetermined range.

The both ends of the dried honeycomb molded body are cut by using a cutting machine, so that a honeycomb molded body having a predetermined length is obtained. Then the cut honeycomb molded body is dried using a drying apparatus. Next, a predetermined amount of a plug material paste is injected into an end on the gas outlet side of each of cells having an opening on the end face on the gas inlet side, and into an end on the gas inlet side of each of cells having an opening on the end face on the gas outlet side, so that each of the cells is sealed. Upon sealing the cells, a mask for sealing the cells is applied to the end face of the honeycomb molded body (that is, the cut surface after the cutting process of the both ends) so that the plug material paste is injected only into the cells that need to be sealed.
A honeycomb molded body with the sealed cells is manufactured through these processes.

Next, the honeycomb molded body with the sealed cells is heated in a degreasing furnace so as to be degreased, and the degreased honeycomb molded body is transported to a firing furnace and fired therein, so that a honeycomb fired body is manufactured.
Moreover, a sealing material paste is applied to a side face of the resulting honeycomb fired body to form a sealing material layer (adhesive layer) thereon, and another honeycomb fired body is successively laminated with this sealing material paste layer interposed therebetween. By repeating these processes, an aggregated body of honeycomb fired bodies with a predetermined number of honeycomb fired bodies being combined with one another is manufactured. Here, with respect to the sealing material paste, a material made from an inorganic binder, an organic binder, and inorganic fibers and/or inorganic particles may be used.

Next, this aggregated body of honeycomb fired bodies is heated, so that the sealing material paste layers are dried and solidified to form sealing material layers (adhesive layers).
Thereafter, a cutting process is carried out on the aggregated body of honeycomb fired bodies by using a diamond cutter or the like to form a ceramic block, and the sealing material paste is applied to a peripheral face of the ceramic block, then dried and solidified thereon to form a sealing material layer (coat layer). Thus, a honeycomb filter is manufactured.

Next, a catalyst supporting layer made from alumina is formed in a predetermined area of the honeycomb filter, and a platinum catalyst is supported on the catalyst supporting layer. More specifically, the following processes (a) and (b) are carried out.
(a) The honeycomb filter is immersed in an alumina solution containing alumina particles with the face to be the end face on the gas inlet side facing down, so that the predetermined area,
in which the catalyst supporting layer is to be formed, is immersed in the alumina solution; thus, the alumina particles are adhered to the predetermined area of the honeycomb filter.
Then, the honeycomb filter is dried at 110 to 200°C for two hours, and the dried honeycomb filter is heated and fired at 500 to 1000°C so that the catalyst supporting layer is formed in the predetermined area of the honeycomb filter.
(b) Next, the honeycomb filter is immersed into a solution of a metal compound containing platinum, with the face to be the end face on the gas inlet side facing down, so that the predetermined area with the catalyst supporting layers being formed therein is immersed in the alumina solution, and the immersed honeycomb filter is dried. Then, the dried honeycomb filter is heated and fired at 500 to 800°C under an inert atmosphere, so that a catalyst is supported on the catalyst supporting layers.

Here, in the methods shown in the processes (a) and (b), the catalyst supporting layer is continuously formed from the end face on the gas inlet side of the honeycomb filter, and the catalyst is supported on this catalyst supporting layer. However, in a case where, as shown in Fig. 3(b), the catalyst supporting layer is to be continuously formed from a position apart from the end face on the gas inlet side of the honeycomb filter, and the catalyst is to be supported on this catalyst supporting layer, for example, the following method may be used.
Namely, prior to carrying out the process (a), an area on the gas inlet side of the honeycomb filter, in which the catalyst supporting layer is not to be formed, is coated with silicone resin, and those processes up to the drying process of the process (a) are carried out by using alumina particles with a platinum catalyst having been preliminarily applied. Then,' the area is further heated to about 300°C so that the silicone resin is fused and removed therefrom; successively, after the heating and firing processes of the process (a) are carried out, the residual silicone resin on the honeycomb filter is dissolved and removed therefrom by using an acid.

The following description will discuss effects of the honeycomb filter of the present embodiment.
(1) Since the thickness of each cell wall is set in a thinner range compared to that of the conventional honeycomb filter, it is possible,to,provide a honeycomb filter having a higher regeneration limit value compared to that of the conventional honeycomb filter.
   Although the mechanism thereof is not clarified, it is presumed that by making the thickness of each cell wall thinner, exhaust gases are allowed to easily pass through the cell wall on the gas inlet side because the resistance toward exhaust gases passing through the cell wall becomes lower than that in the case of passing through a thicker cell wall. For this reason, out of the exhaust gases passing through the cell walls, the rate of exhaust gases passing through the gas inlet side becomes higher than the conventional honeycomb filter, so that PMs are easily captured on the gas inlet side as well.
   Consequently, in the honeycomb filter of the present invention, it is possible to make the amount of PMs to be captured on the gas outlet side relatively smaller, and consequently to make the temperature difference between the gas inlet side and the gas outlet side upon burning PMs smaller.
(2) Since the thickness of each cell wall is set in a thinner range compared to that of the conventional honeycomb filter, it is possible to provide a honeycomb filter that has a lowered pressure loss and has a higher temperature raising property compared to those of the conventional honeycomb filter.
(3) Since no catalyst supporting layer is formed in the area covering 10% of the overall length of the honeycomb filter from the end face on the gas outlet side, and since the area is made of a material having a high thermal conductivity, it is possible to accelerate heat radiation from the vicinity of the end face on the gas outlet side. As a result, since the increase of the temperature on the gas outlet side can be prevented, it becomes possible to alleviate a thermal impact caused by the temperature difference between the gas inlet side and the gas outlet side of the honeycomb filter.
(4) Since the catalyst supporting layer is formed in the area covering 25% or more of the overall length of the honeycomb filter from the end face on the gas inlet side, the area with the catalyst being supported thereon is sufficiently large. Therefore, it is possible to prevent a large amount of heat generation within a narrow area upon carrying out a regeneration process.
(5) By setting the thickness of each cell wall to a thinner range compared to the cell wall of the conventional honeycomb filter and by forming the catalyst supporting layer in a desirable area, the resulting synergistic effect improves the regeneration limit value.

For this reason, although the thickness of the cell wall is set in a thinner range compared to the conventional honeycomb filter, it is possible to provide a honeycomb filter having a high regeneration limit value.

### EXAMPLES

The following description will discuss the first embodiment of the present invention in more detail by using examples; however, the present invention is not limited only to these examples.

Honeycomb filters were manufactured with the cell wall thickness being different values of 0.18 mm (7 mil) to 0.30 mm (12 mil), and the honeycomb filters were also manufactured with the formation range of the catalyst supporting layer being changed; thus, the regeneration limit value was measured on each of these honeycomb filters.

### (Example 1)

### (Manufacturing of honeycomb filter)

52.8% by weight of coarse powder of silicon carbide having an average particle diameter of 22 µm and 22.6% by weight of fine powder of silicon carbide having an average particle diameter of 0.5 µm were wet-mixed. To the resulting mixture, 2.1% by weight of acrylic resin, 4.6% by weight of an organic binder (methylcellulose), 2.8% by weight of a lubricant (UNILUB, made by NOF Corporation), 1.3% by weight of glycerin, and 13.8% by weight of water were added, and then kneaded to prepare a mixture. Then, the mixture was extrusion-molded so that a raw honeycomb molded body having virtually the same shape as the shape shown in Fig. 2(a) was manufactured.

Next, the raw honeycomb molded body was dried by using a microwave drying apparatus to obtain a dried body of the honeycomb molded body. A paste having the same composition as the raw molded body was then injected into predetermined cells, and the honeycomb molded body was again dried by a drying apparatus.

The dried honeycomb molded body was degreased at 400°C, and then fired at 2200°C under normal pressure argon atmosphere for 3 hours so that a honeycomb fired body made of a silicon carbide fired body, with a porosity of 45%, an average pore diameter of 15 µm, a size of 34.3 mm × 34.3 mm × 150 mm, the number of cells (cell density) of 200 pcs/inch² (31.0 pcs/inch²) and a thickness of the cell wall of 0.25 mm (10 mil), was manufactured.

### (Manufacturing of honeycomb filter)

A large number of honeycomb f ired bodies were bonded to one another by using a heat resistant sealing material paste containing 30% by weight of alumina fibers having an average fiber length of 20 µm, 21% by weight of silicon carbide particles having an average particle diameter of 0.6 µm, 15% by weight of silica sol, 5.6% by weight of carboxymethyl cellulose, and 28.4% by weight of water. The bonded honeycomb fired bodies were dried at 120°C, and then cut by using a diamond cutter so that a round pillar-shaped ceramic block having the sealing material layer (adhesive layer) with a thickness of 1.0 mm was manufactured.

Next, a sealing material paste layer having a thickness of 0.2 mm was formed on the peripheral portion of the ceramic block by using the sealing material paste. Further, this sealing material paste layer was dried at 120°C so that a round pillar-shaped honeycomb filter having a size of 143.8 mm in diameter × 150 mm in length, with a sealing material layer (coat layer) formed on the periphery thereof, was manufactured.

### (Forming of catalyst supporting layer)

γ-alumina particles were mixed with a sufficient amount of water, and stirred to form an alumina slurry. A honeycomb filter was immersed in this alumina slurry up to an area covering 50% of its overall length, with its end face on the gas inlet side facing down, and maintained in this state for one minute.
Next, this honeycomb filter was heated at 110°C for one hour to be dried, and further fired at 700°C for one hour so that a catalyst supporting layer was formed in the area covering 50% of its overall length from the end face on the gas inlet side of the honeycomb filter.
At this time, the immersing process into the alumina slurry, drying process, and firing process were repeatedly carried out so that the formation amount of the catalyst supporting layer became 40 g per 1 liter of volume of the area with the catalyst supporting layer being formed in the honeycomb filter.

### (Supporting process of platinum catalyst)

The honeycomb filter was immersed in a solution of diammine dinitro platinum nitric acid ([Pt(NH₃)₂(NO₂)₂]HNO₃, platinum concentration of 4.53% by weight) up to an area covering 50% of its overall length, with its end face on the gas inlet side facing down and maintained in this state for one minute.
Next, the honeycomb filter was dried at 110°C for two hours, and further fired at 500°C for one hour under a nitrogen atmosphere so that a platinum catalyst was supported on the catalyst supporting layer.
The amount of the supported platinum catalyst was 3 g of platinum on the honeycomb filter, with respect to 20 g of alumina of the catalyst supporting layer.
Thus, a honeycomb filter with a catalyst supporting layer made of alumina being formed in a predetermined area, and with the platinum catalyst being supported on this catalyst supporting layer, was manufactured.
The following measurements were carried out on the manufactured honeycomb filter.

### (Measurements of thermal conductivity)

As shown in Fig. 2(b), one portion of cell walls of a honeycomb filter was cut out to form a measuring portion 31 on the gas inlet side and a measuring portion 32 on the gas outlet side, and the thermal conductivity of each of cell walls on the respective measuring portions was measured by using a laser flash method.

### (Measurements of the regeneration limit value)

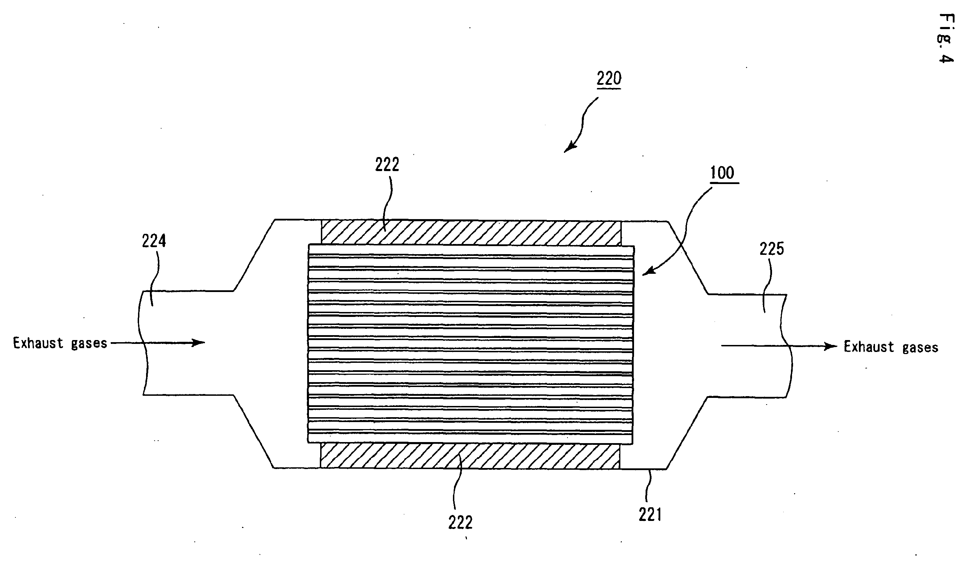

As shown in Fig. 4, a honeycomb filter was disposed in an exhaust passage of an engine so that an exhaust gas purifying apparatus was formed, and the regeneration limit value was measured.
An exhaust gas purifying apparatus 220 was mainly configured by a honeycomb filter 100, a casing 221 covering the outside of the honeycomb filter 100, and a holding sealing material 222 interposed between the honeycomb filter 100 and the casing 221. To the end portion of the casing 221 on the side from which exhaust gases were introduced, there was an introducing pipe 224 which was coupled to an internal combustion engine such as an engine, and an exhaust pipe 225 coupled to the outside was connected to the other end portion of the casing 221. Here, in Fig. 4, arrows show the flow of exhaust gases.
The engine was driven at the number of revolutions of 3000 min⁻¹ and a torque of 50 Nm for a predetermined period of time so that a predetermined amount of PMs was captured. Thereafter, the engine was driven at full load at the number of revolutions of 4000 min⁻¹, and at the time when the filter temperature became constant at about 700°C, the engine was driven at the number of revolutions of 1050 min⁻¹ and a torque of 30 Nm so that PMs were forcefully burned.
Then, this experiment used for carrying out a regeneration process was executed while the amount of captured PMs was being changed so that whether or not any crack occurred in the filter was examined. Here, the maximum amount of PMs without causing any cracks was defined as the regeneration limit value.

With respect to each honeycomb filter manufactured in Example 1, Table 1 collectively shows the results of measurements of: the cell wall thickness; the formation range, the formation position and the formation amount of the catalyst supporting layer; and the thermal conductivity and the regeneration limit value.
It should be noted that the formation position of the catalyst supporting layer was represented by the position (%) from the gas inlet side with respect to the overall length of a honeycomb filter, supposing that the position of the end face on the gas inlet side was 0% and that the position of the end face on the gas outlet side was 100%. In Example 1, since the catalyst supporting layer is formed in the area covering 50% from the end face on the gas inlet side, the formation position is given as "0 to 50".
Moreover, the formation amount of the catalyst supporting layer is indicated by the formation amount per volume of 1 liter of the area with the catalyst supporting layer being formed therein in the honeycomb filter.

### (Examples 2 to 4, Comparative Examples 1 and 2)

The same honeycomb filters as that of Example 1 were manufactured, and upon forming a catalyst supporting layer on each of these, the depth to which each honeycomb filter was immersed in the slurry was changed; thus, as shown in Table 1, the honeycomb filters with the catalyst supporting layers being formed therein in respective ranges covering 20 to 100% of the overall length of the honeycomb filters were manufactured.
At this time, the number of repeated cycles of the immersing process into an alumina slurry, the drying process and the firing process was changed, so that the formation amount of each catalyst supporting layer per volume of 1 liter of the area with the catalyst supporting layer being formed therein in the honeycomb filter was set to each of values shown in Table 1.
In this case, the formation amount was designed so that the formation amount of the catalyst supporting layer became 20 g per volume of 1 liter of the entire honeycomb filter.
Here, except for Example 3, the catalyst supporting layer was formed in each of areas covering ranges as shown in Table 1 from the end face of the gas inlet side of the honeycomb filter.
In Example 3, after the area covering 25% of the overall length of the honeycomb filter from the end face of the gas inlet side of the honeycomb filter had been coated with silicon resin, the honeycomb filter was immersed in an alumina slurry with a platinum catalyst being supported therein, from the end face of the gas inlet side of the honeycomb filter to a position corresponding to 50% of the overall length of the honeycomb filter.
Next, a drying process was carried out at 110°C for one hour, and further the honeycomb filter was heated to 300°C so that the silicon resin was fused and removed. Thereafter, the honeycomb filter was fired at 700°C so that a catalyst supporting layer with the catalyst being supported thereon was formed, and lastly, the residual silicon resin was dissolved by using 1% hydrochloric acid.
As shown in Fig. 3(b), by using the above-described processes, a catalyst supporting layer was formed in which the catalyst was supported on the area covering 25% of the overall length of the honeycomb filter, ranging from a position corresponding to 25% to a position corresponding to 50% of the overall length of the honeycomb filter from the end face on the gas inlet side of the honeycomb filter.
On these honeycomb filters also, the measurements of each characteristic were carried out in the same manner as Example 1, and the results of the measurements are collectively shown in Table 1.

**[Table 1]**

| | Cell wall thickness (mm) | Inlet side catalyst supporting layer | | | Thermal conductivity (W/mK) | | | Regeneration limit value (g/L) |
|---|---|---|---|---|---|---|---|---|
| | | Formation range (%) | Formation position (%) | Formation amount (g/L) | Inlet side | Outlet side | Ratio | |
| Comparative Example 1 | 0.25 | 20 | 0 to 20 | 100.0 | 5.3 | 16.9 | 3.2 | 4.5 |
| Example 2 | 0.25 | 25 | 0 to 25 | 80.0 | 6.0 | 16.9 | 2.8 | 6.2 |
| Example 3 | 0.25 | 25 | 25 to 50 | 80.0 | 6.0 | 16.9 | 2.8 | 6.1 |
| Example 1 | 0.25 | 50 | 0 to 50 | 40.0 | 9.7 | 16.9 | 1.7 | 7.2 |
| Example 4 | 0.25 | 90 | 0 to 90 | 22.2 | 12.0 | 16.9 | 1.4 | 6.5 |
| Comparative Example 2 | 0.25 | 100 | 0 to 100 | 20.0 | 12.5 | - | - | 4.1 |

Table 1 shows characteristics of a honeycomb filter when changing the range within which the catalyst supporting layer is formed, and Table 1 shows from Comparative Example 1 on the uppermost stage to Comparative Example 2 on the lowermost stage, in the descending order of the formation range sizes of the catalyst supporting layer.

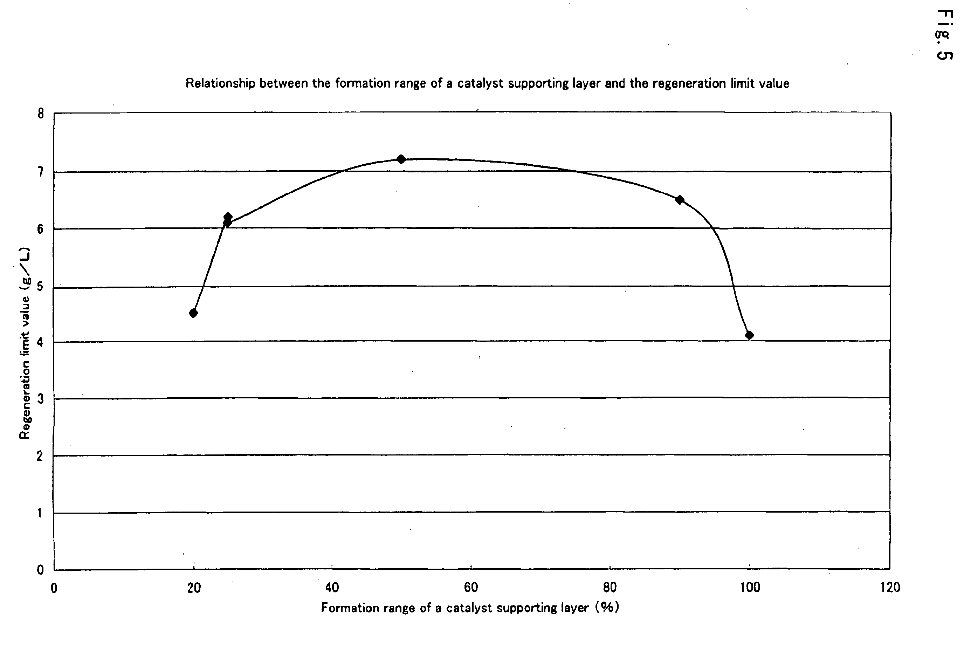

Fig. 5 is a graph on which the relationship between the formation range of the catalyst supporting layer and the regeneration limit value is plotted based upon the results shown in Table 1.
According to Table 1 and Fig. 5, when the formation range of the catalyst supporting layer on the gas inlet side is 25 to 90%, the regeneration limit value is 6 g/L or more, which is a high level, and when the formation range of the catalyst supporting layer on the gas inlet side is 20% and when it is 100%, the respective regeneration limit values are 4.5 g/L and 4.1 g/L, which are a low level.
In other words, by forming the catalyst supporting layer in a range defined by the present invention, it is possible to provide a honeycomb filter having a high regeneration limit value.

### (Examples 5 to 12, Comparative Examples 3 to 10)

Except that the thickness of cell wall was changed to each of values shown in Tables 2 to 5, the same processes as those of Example 1 were carried out to manufacture honeycomb filters, and forming of the catalyst supporting layer and supporting of the catalyst were carried out on each of the honeycomb filters as shown in Tables 2 to 5 to manufacture the honeycomb filters.
On these honeycomb filters also, measurements of each characteristic were carried out in the same manner as Example 1, and the results of the measurements are collectively shown in Tables 2 to 5.

**[Table 2]**

| | Cell wall thickness (mm) | Inlet side catalyst supporting layer | | | Thermal conductivity (W/mK) | | | Regeneration limit value (g/L) |
|---|---|---|---|---|---|---|---|---|
| | | Formation range (%) | Formation position (%) | Formation amount (g/L) | Inlet side | Outlet side | Ratio | |
| Comparative Example 3 | 0.3 | 50 | 0 to 50 | 40.0 | 9.7 | 16.9 | 1.7 | 4.8 |
| Comparative Example 4 | 0.3 | 90 | 0 to 90 | 22.2 | 12.0 | 16.9 | 1.4 | 4.5 |

**[Table 3]**

| | Cell wall thickness (mm) | Inlet side catalyst supporting layer | | | Thermal conductivity (W/mK) | | | Regeneration limit value (g/L) |
|---|---|---|---|---|---|---|---|---|
| | | Formation range (%) | Formation position (%) | Formation amount (g/L) | Inlet side | Outlet side | Ratio | |
| Comparative Example 5 | 0.28 | 20 | 0 to 20 | 100.0 | 5.3 | 16.9 | 3.2 | 4.2 |
| Example 5 | 0.28 | 25 | 0 to 25 | 80.0 | 6.0 | 16.9 | 2.8 | 6.2 |
| Example 6 | 0.28 | 25 | 25 to 50 | 80.0 | 6.0 | 16.9 | 2.8 | 6.1 |
| Example 7 | 0.28 | 50 | 0 to 50 | 40.0 | 9.7 | 16.9 | 1.7 | 7.1 |
| Example 8 | 0.28 | 90 | 0 to 90 | 22.2 | 12.0 | 16.9 | 1.4 | 6.3 |
| Comparative Example 6 | 0.28 | 100 | 0 to 100 | 20.0 | 12.5 | - | - | 4.4 |

**[Table 4]**

| | Cell wall thickness (mm) | Inlet side catalyst layer supporting | | | Thermal conductivity (W/mK) | | | Regeneration limit value (g/L) |
|---|---|---|---|---|---|---|---|---|
| | | Formation range (%) | Formation position (%) | Formation amount (g/L) | Inlet side | Outlet side | Ratio | |
| Comparative Example 7 | 0.2 | 20 | 0 to 20 | 100.0 | 5.3 | 16.9 | 3.2 | 3.9 |
| Example 9 | 0.2 | 25 | 0 to 25 | 80.0 | 6.0 | 16.9 | 2.8 | 6.0 |
| Example 10 | 0.2 | 25 | 25 to 50 | 80.0 | 6.0 | 16.9 | 2.8 | 6.0 |
| Example 11 | 0.2 | 50 | 0 to 50 | 40.0 | 9.7 | 16.9 | 1.7 | 6.7 |
| Example 12 | 0.2 | 90 | 0 to 90 | 22.2 | 12.0 | 16.9 | 1.4 | 6.2 |
| Comparative Example 8 | 0.2 | 100 | 0 to 100 | 20.0 | 12.5 | - | - | 3.5 |

**[Table 5]**

| | Cell wall thickness (mm) | Inlet side catalyst supporting layer | | | Thermal conductivity (W/mK) | | | Regeneration limit value (g/L) |
|---|---|---|---|---|---|---|---|---|
| | | Formation range (%) | Formation position (%) | Formation amount (g/L) | Inlet side | Outlet side | Ratio | |
| Comparative Example 9 | 0.18 | 50 | 0 to 50 | 40.0 | 9.7 | 16.9 | 1.7 | 4.1 |
| Comparative Example 10 | 0.18 | 90 | 0 to 90 | 22.2 | 12.0. | 16.9 | 1.4 | 3.8 |

Tables 2 to 5 respectively show the results of measurements on honeycomb filters which were manufactured with cell wall thickness of 0.30 mm, 0.28 mm, 0.20 mm and 0.18 mm.

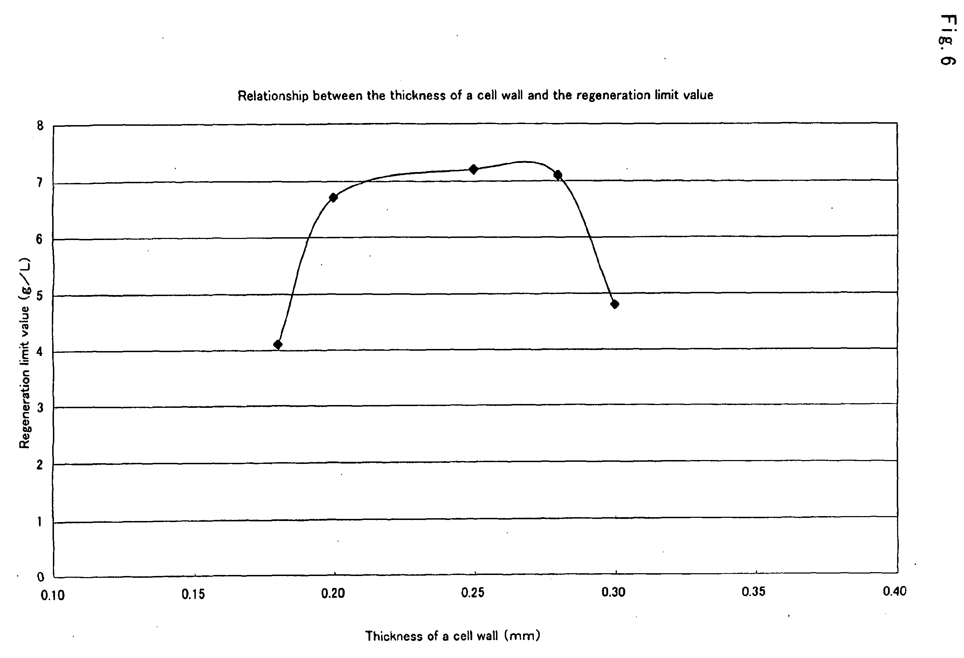

Fig. 6 is a graph on which the relationship between the regeneration limit value and the cell wall thickness is plotted with respect to Comparative Example 3, Example 7, Example 11, Comparative Example 9, and Example 1 shown in Table 1, each having 50% of the formation range of the catalyst supporting layer.
As indicated by Tables 1 to 5 and Fig. 6, when the thickness of the cell wall is 0.20 to 0.28 mm, the regeneration limit value is 6 g/L or more, which is a high level, and when the thickness of the cell wall is 0.18 mm and when it is 0.30 mm, the respective regeneration limit values are 4.1 g/L and 4.8 g/L, which are a low level.
In other words, by forming the thickness of the cell wall in a range defined by the present invention, it is possible to provide a honeycomb filter having a high regeneration limit value.

### (Second Embodiment)

The honeycomb filter of the first embodiment has a structure in which a plurality of honeycomb fired bodies are combined with one another by interposing a sealing material layer (adhesive layer) between them; however, the honeycomb filter may be formed by a single honeycomb fired body.
In the present description, the former described honeycomb filter is referred to as an aggregated honeycomb filter, and the latter described honeycomb filter is referred to as an integral honeycomb filter.

Upon manufacturing such an integral honeycomb filter, a honeycomb molded body is formed by using the same method as the manufacturing method of the aggregated honeycomb filter, except that the size of a honeycomb molded body to be molded through the extrusion-molding process is larger than in a case where the aggregated honeycomb filter is manufactured. Thereafter, the integral honeycomb structured body can be manufactured by using the same method as the manufacturing method of the aggregated honeycomb structured body of the first embodiment.

Further, with respect to a main constituent material of the integral honeycomb filter, cordierite and aluminum titanate, which are superior in thermal impact resistance, are desirably used, and also in the present embodiment, it is possible to obtain the effects (1) to (5) of the first embodiment.

### (Other embodiments)

With respect to the shape of the honeycomb filter of the present invention, it is not particularly limited to the round pillar shape shown in Fig. 1, and the honeycomb filter may have any desired pillar shape, such as a cylindroid shape and a rectangular pillar shape.

The porosity of the honeycomb filter of the present invention is desirably 30 to 70%.
This structure makes it possible to maintain sufficient strength in the honeycomb filter and to maintain a low level resistance at the time of passage of exhaust gases through the cell walls.

In contrast, the porosity of less than 30% tends to cause clogging in the cell walls in an early stage, while the porosity of more than 70% tends to cause a decrease in strength of the honeycomb filter with the result that the honeycomb filter might be easily broken.
Here, the porosity can be measured through conventionally known methods, such as a mercury injection method, Archimedes method, and a measuring method using a scanning electronic microscope (SEM).

The cell density on a cross section perpendicular to the longitudinal direction of the honeycomb filter is not particularly limited. However, a desirable lower limit is 31.0 pcs/cm² (200 pcs/in²) and a desirable upper limit is 93 pcs/cm² (600 pcs/in²). Amore desirable lower limit is 38.8 pcs/cm² (250 pcs/in²) and a more desirable upper limit is 77.5 pcs/cm² (500 pcs/in²).

In the aggregated honeycomb filter as shown in the first embodiment, silicon carbide, which is superior in the heat resistant property, mechanical strength, and thermal conductivity, is particularly desirable as the main component of the constituent materials of the honeycomb filter.
Moreover, a material prepared by compounding metal silicon with silicon carbide (silicon-containing silicon carbide) is also desirable.

Although the particle diameter of silicon carbide powder in the wet mixture is not particularly limited, the silicon carbide powder that tends not to cause the case where the size of the honeycomb structured body manufactured by the following firing treatment becomes smaller than that of the honeycomb molded body after degreased is desirable. For example, silicon carbide powder prepared by combining 100 parts by weight of powder having an average particle diameter of 1. 0 to 50 µm with 5 to 65 parts by weight of powder having an average particle diameter of 0.1 to 1.0 µm, is preferably used.
Although the firing temperature needs to be adjusted to adjust the pore diameter and the like of the honeycomb fired body, the pore diameter can be adjusted also by adjusting the particle diameter of ceramic powder.

The organic binder in the wet mixture is not particularly limited, and examples thereof include: carboxymethyl cellulose, hydroxyethyl cellulose, polyethylene glycol, and the like. Out of these, methylcellulose is more desirably used. In general, the compounding amount of the organic binder is desirably 1 to 10 parts by weight with respect to 100 parts by weight of the ceramic powder.

A plasticizer and a lubricant to be used upon preparing the wet mixture are not particularly limited, and for example, glycerin or the like may be used as the plasticizer. Moreover, as the lubricant, for example, polyoxy alkylene-based compounds, such as polyoxyethylene alkyl ether and polyoxypropylene alkyl ether, may be used.
Specific examples of the lubricant include: polyoxyethylene monobutyl ether, polyoxypropylene monobutyl ether, and the like.
Here, the plasticizer and the lubricant are not necessarily contained in the wet mixture depending on cases.

Upon preparing the wet mixture, a dispersant solution may be used, and examples of the dispersant solution include water, an organic solvent such as benzene, and alcohol such as methanol.
Moreover, a molding auxiliary may be added to the wet mixture.
The molding auxiliary is not particularly limited, and examples thereof include ethylene glycol, dextrin, fatty acid, fatty acid soap, polyalcohol, and the like.

Furthermore, a pore-forming agent, such as balloons that are fine hollow spheres comprising an oxide-based ceramic, spherical acrylic particles, and graphite may be added to the wet mixture, if necessary.
With respect to the balloons, not particularly limited, for example; alumina balloons, glass micro-balloons, shirasu balloons, fly ash balloons (FA balloons), mullite balloons and the like may be used. Out of these, alumina balloons are more desirably used.

Moreover, the content of organic components in the wet mixture is desirably 10% by weight or less, and the content of moisture is desirably 8 to 30% by weight.

Although a plug material paste used for sealing cells is not particularly limited, the plug material paste that allows the plugs manufactured through post processes to have a porosity of 30 to 75% is desirably used. For example, the same material as that of the wet mixture may be used.

Examples of the inorganic binder in the sealing material paste include silica sol, alumina sol and the like. Each of these may be used alone or two or more kinds of these may be used in combination. Silica sol is more desirably used among the inorganic binders.

Examples of the organic binder in the sealing material paste include polyvinyl alcohol, methyl cellulose, ethyl cellulose, carboxymethyl cellulose, and the like. Each of these may be used alone or two or more kinds of these may be used in combination. Carboxymethyl cellulose is more desirably used among the organic binders.

Examples of the inorganic fibers in the sealing material paste include ceramic fibers and the like made from silica-alumina, mullite, alumina, silica or the like. Each of these may be used alone or two or more kinds of these may be used in combination. Alumina fibers are more desirably used among the inorganic fibers.

Examples of the inorganic particles in the sealing material paste include carbides, nitrides, and the like, and specific examples thereof include inorganic powder and the like made from silicon carbide, silicon nitride, boron nitride, and the like. Each of these may be used alone, or two or more kinds of these may be used in combination. Out of the inorganic particles, silicon carbide is desirably used due to its superior thermal conductivity.

Furthermore, a pore-forming agent, such as balloons that are fine hollow spheres comprising an oxide-based ceramic, spherical acrylic particles, and graphite may be added to the sealing material paste, if necessary. The balloons are not particularly limited, and for example, alumina balloons, glass micro-balloons, shirasu balloons, fly ash balloons (FA balloons), mullite balloons, and the like may be used. Out of these, alumina balloons are more desirably used.

With respect to the material forming the catalyst supporting layer, the material having a high specific surface area and capable of highly dispersing the catalyst to support the catalyst thereon is desirably used, and examples thereof include an oxide ceramic such as alumina, titania, zirconia, and silica. A plurality of kinds of these materials may be selected at the same time.
Out of these, the materials having a high specific surface area of 250 m²/g or more is desirably selected, and γ-alumina is particularly desirable.

Further, the method for forming the catalyst supporting layer made from above-mentioned alumina is particularly limited to the method explained in the first embodiment. For example, a method may be used in which a honeycomb filter is immersed in a metal compound solution containing aluminum such as an aqueous solution of aluminum nitrate so that the cell walls are coated with an alumina film through a sol-gel method, and the resulting honeycomb filter is dried and fired.

With respect to the catalyst to be supported on the surface of the catalyst supporting layer, for example, noble metals such as platinum, palladium, and rhodium are desirably used. Out of these, platinum is more preferably used. Moreover, with respect to other catalysts, alkali metals such as potassium, sodium, and the like, or alkali-earth metals such as barium may be used. Each of these catalysts may be used alone, or two or more kinds of these may be used in combination.

### BRIEF DESCRIPTION OF THE DRAWINGS

Fig. 1 is a perspective view schematically showing one example of a honeycomb filter of the present invention.
Fig. 2(a) is a perspective view schematically showing one example of a honeycomb fired body forming a honeycomb filter of the present invention, and Fig. 2(b) is an A-A line cross-sectional view of the honeycomb fired body shown in Fig. 2(a).
Figs. 3(a) to 3(d) are cross-sectional views schematically showing examples of areas with the catalyst supporting layer being formed therein, in honeycomb fired bodies that form a honeycomb filter of the first embodiment of the present invention.
Fig. 4 is a cross-sectional view showing an exhaust gas purifying apparatus used upon measuring a regeneration limit value.
Fig. 5 is a graph showing the relationship between the formation range of a catalyst supporting layer and the regeneration limit value in each of Examples and Comparative Examples.
Fig. 6 is a graph showing the relationship between the thickness of a cell wall and the regeneration limit value in each of Examples and Comparative Examples.

### EXPLANATION OF SYMBOLS

- 10: Catalyst supporting layer
- 21: End face on the gas inlet side
- 22: End face on the gas outlet side
- 100: Honeycomb filter
- 110: Honeycomb fired body
- 111: Cell
- 112: Plug
- 113: Cell wall
- G: Exhaust gases

## Claims

1. A honeycomb filter comprising a pillar-shaped honeycomb fired body having a large number of cells longitudinally disposed in parallel with one another with a cell wall therebetween, only one end of each of said cells being sealed,
said honeycomb filter allowing gases having flowed in through the cells open on one end face side of the body forming the gas inlet side to flow out through the cells on the other end face side of the body forming the gas outlet side,
wherein
the thickness of each of said cell walls is 0.20 to 0.28 mm;
no catalyst supporting layer is formed in the area covering 10% of the overall length of said honeycomb filter from the end face on the gas outlet side of said honeycomb filter;
out of the area covering 90% of the overall length of said honeycomb filter from the end face on the gas inlet side, a catalyst supporting layer is formed in the area covering 25% to 90% of the overall length of the honeycomb filter; and
in said honeycomb filter, a thermal conductivity of the area with said catalyst supporting layer being not formed therein is higher than a thermal conductivity of the area with said catalyst supporting layer being formed therein, and said honeycomb filter includes silicon carbide as main component of the ceramic material.

2. The honeycomb filter according to claim 1,
wherein
a catalyst is supported on said catalyst supporting layer.

3. The honeycomb filter according to claim 1 or 2,
wherein
a thermal conductivity of the area with said catalyst supporting layer being not formed therein is 1.3 to 5.0 times higher than the thermal conductivity of the area with the catalyst supporting layer being formed therein.

## Patentansprüche

1. Wabenfilter, der einen säulenförmigen, gebrannten Wabenkörper umfasst, der eine große Anzahl von longitudinal angeordneten, zueinander parallelen Zellen mit einer Zellwand dazwischen aufweist, wobei nur ein Ende von jeder der Zellen versiegelt ist,
worin der Wabenfilter es Gasen, die durch die Zellen hineingeflossen sind, die an einer die Gaseinlassseite bildenden Endflächenseite des Körpers offen sind, ermöglicht, durch die Zellen auf der anderen Endflächenseite, die die Gasauslassseite bildet, hinauszufließen,
worin
die Dicke jeder der Zellwände 0,20 bis 0,28 mm ist;
auf der Fläche, die 10 % der Gesamtlänge des Wabenfilters von der Endfläche auf der Gasauslassseite des Wabenfilters her bedeckt, keine Katalysatorträgerschicht gebildet ist;
auf der Fläche, die 90 % der Gesamtlänge des Wabenfilters von der Endfläche auf der Gaseinlassseite her bedeckt, eine Katalysatorträgerschicht auf einer Fläche, die 25 bis 90 % der Gesamtlänge des Wabenfilters bedeckt, gebildet ist; und
im Wabenfilter eine thermische Leitfähigkeit der Fläche, auf der die Katalysatorträgerschicht nicht gebildet ist,
höher ist als eine thermische Leitfähigkeit der Fläche, auf der die Katalysatorträgerschicht gebildet ist, und der Wabenfilter als Hauptkomponente Siliziumcarbid als keramisches Material beinhaltet.

2. Wabenfilter gemäß Anspruch 1, worin ein Katalysator auf der Katalysatorträgerschicht aufgebracht ist.

3. Wabenfilter gemäß Anspruch 1 oder 2, worin die thermische Leitfähigkeit der Fläche, auf der die Katalysatorträgerschicht nicht gebildet ist, 1,3- bis 5,0-mal höher ist als die thermische Leitfähigkeit der Fläche, auf der die Katalysatorträgerschicht gebildet ist.

## Revendications

1. Filtre en nid d'abeilles comprenant un corps cuit en nid d'abeilles en forme de pilier ayant un grand nombre de cellules disposées longitudinalement en parallèle les unes aux autres avec une paroi de cellule entre celles-ci, une seule extrémité de chacune desdites cellules étant fermée,
ledit filtre en nid d'abeilles permettant que des gaz ayant pénétré à travers les cellules ouvertes sur un côté de face d'extrémité du corps formant le côté d'entrée de gaz sortent à travers les cellules sur l'autre côté de face d'extrémité du corps formant le côté de sortie de gaz,
dans lequel
l'épaisseur de chacune desdites parois de cellules est 0,20 à 0,28 mm ;
aucune couche de support de catalyseur n'est formée dans la zone couvrant 10% de la longueur globale dudit filtre en nid d'abeilles à partir de la face d'extrémité sur le côté de sortie de gaz dudit filtre en nid d'abeilles ;
sur la zone couvrant 90% de la longueur globale dudit filtre en nid d'abeilles à partir de la face d'extrémité sur le côté d'entrée de gaz, une couche de support de catalyseur est formée dans la zone couvrant 25% à 90% de la longueur globale dudit filtre en nid d'abeilles ; et
dans ledit filtre en nid d'abeilles, une conductivité thermique de la zone avec ladite couche de support de catalyseur n'étant pas formée dans celle-ci est supérieure à une conductivité thermique de la zone avec ladite couche de support de catalyseur étant formée dans celle-ci, et ledit filtre en nid d'abeilles inclut du carbure de silicium comme composant principal du matériau céramique.

2. Filtre en nid d'abeilles selon la revendication 1,
dans lequel
un catalyseur est supporté sur ladite couche de support de catalyseur.

3. Filtre en nid d'abeilles selon la revendication 1 ou 2,
dans lequel
une conductivité thermique de la zone avec ladite couche de support de catalyseur n'étant pas formée dans celle-ci est 1,3 à 5,0 fois supérieure à la conductivité thermique de la zone avec ladite couche de support de catalyseur étant formée dans celle-ci.
